# EUROPEAN PATENT APPLICATION

(11) **EP 1 180 454 A2**
(43) Date of publication of application: **20.02.2002**
(21) Application number: 01116729.3
(22) Date of filing: 18.07.2001
(51) Int. Cl.: B60R 11/02, B60R 22/00

(54) **Ultra low power seatbelt mounted wireless microphone for automotive control applications**

(30) Priority: 08.08.2000 US 634049
(71) Applicant: TRW Inc., Redondo Beach, California 90278 (US)
(72) Inventor: Dunbridge, Barry, Torrance, CA 90505 (US); McIver, George W., Redondo Beach, CA 90277 (US); Berenz, John J., San Pedro, CA 90731 (US)
(74) Representative: Schmidt, Steffen J., Dipl.-Ing.

(57) **Abstract**

A system for providing recognition of an acoustic wave generated within an interior cabin of an automobile includes an anchored strap placed across the chest of a passenger seated in the automobile and a low power, high fidelity wireless microphone unit integrated with the anchored strap at a position substantially proximal to the passenger's chest. The microphone unit detects the acoustic wave within the interior cabin of the automobile, generates a frequency modulated signal corresponding thereto and transmits the frequency modulated signal to a receiver unit that is also located within the interior compartment of the automobile.

## Description

### BACKGROUND OF THE INVENTION

### 1. Field of the Invention

The present invention relates generally to an ultra low power wireless microphone unit for providing recognition of voice speech acoustic sound waves generated within the interior cabin of an automobile or similarly high noise environment and more specifically to a compact, ultra low power, high fidelity wireless microphone unit that is capable of high duty cycle and continuous operation from an independent power source and is suitable for detachable mounting to a driver's seatbelt.

### 2. Description of the Prior Art

As the number of onboard functions available to automobile drivers' increases, so too increases the number of accidents caused by "distracted drivers." To overcome concerns related to distracted drivers, various voice recognition systems have been implemented in the art that control functions that include cellular phones, radios, etc.

In conventional voice recognition systems, the reception of intelligible driver speech (and telematic or other intended commands) within an automobile interior environment is widely known to be problematic. This is due to the high noise interference within the acoustically reverberant cabin of the automobile as a result of vibration noise, wind noise, motor noise, appliance noise, etc. Thus, it is important for safety and convenience to the automobile occupants to alleviate the noise interference so that more reliable reception of speech can be achieved.

Various methods exist in the art for alleviating noise interference. For example, active noise cancellation systems have been implemented in the art to overcome ambient cabin noise distractions, but such systems typically require a prohibitively expensive personal computer (PC) that is stored in the trunk of the automobile.

Passive noise cancellation has also been considered as a potential solution, however, the acoustically reverberant environment of the passenger compartment does not allow for microphone directional arrays to be effective in passive noise cancellation. In particular, noise cancellation techniques using multiple microphone arrays schemes or digital signal processing (DSP) schemes that attempt to implement time, frequency speech waveform optimization for signal to noise ratio (SNR) enhancement have been studied and proposed by various suppliers with less than optimal results. For example, tests show that after the proper passband audio filter is inserted in a speech signal path, the improvement in SNR achieved by DSP, as measured by the accuracy of an automatic speech recognizer (ASR) is questionable. This is believed to occur because, as previously mentioned, the interior cabin of the automobile is a highly reverberant chamber and also because the noise of such an environment exists throughout the speech frequency spectrum.

Thus, an ultra low power continuously operative wireless microphone for transmitting a driver's voice commands to an automobile control system that provides high duty cycle operation, high fidelity operation, and high signal to noise ratio (SNR) enhancement and is seatbelt mountable is highly desirable.

### SUMMARY OF THE INVENTION

The preceding and other shortcomings of the prior art are addressed and overcome by the present invention that provides a system for providing recognition of an acoustic wave generated within an interior cabin of an automobile. The system includes an anchored strap placed across the chest of a passenger seated in the automobile and a wireless microphone unit integrated with the anchored strap at a position substantially proximal to the passenger's chest. The microphone unit detects the acoustic wave within the interior cabin of the automobile, generates a frequency modulated signal corresponding thereto and transmits the frequency modulated signal to a receiver unit that is also located within the interior compartment of the automobile.

### BRIEF DESCRIPTION OF THE DRAWINGS

Reference is now made to the following description and attached drawings, wherein:
FIG. 1 is an isometric diagram of a system for providing recognition of an acoustic wave generated within the interior cabin of an automobile in accordance with an embodiment of the present invention;
FIG. 2 is a schematic diagram of an embodiment of a microphone transmitter circuit unit in accordance with the present invention;
FIG. 3a is a functional diagram of a capacitance modulation technique in accordance with the present invention;
FIG. 3b is a functional diagram of an alternate capacitance modulation technique in accordance with the present invention;
FIG. 3c is a functional diagram of an inductance modulation technique in accordance with the present invention;
FIG. 3d is a functional diagram of an alternate inductance modulation technique in accordance with the present invention; and
FIG. 4 is a schematic diagram of an alternate embodiment of a microphone transmitter circuit in accordance with the present invention.

### DETAILED DESCRIPTION OF THE INVENTION

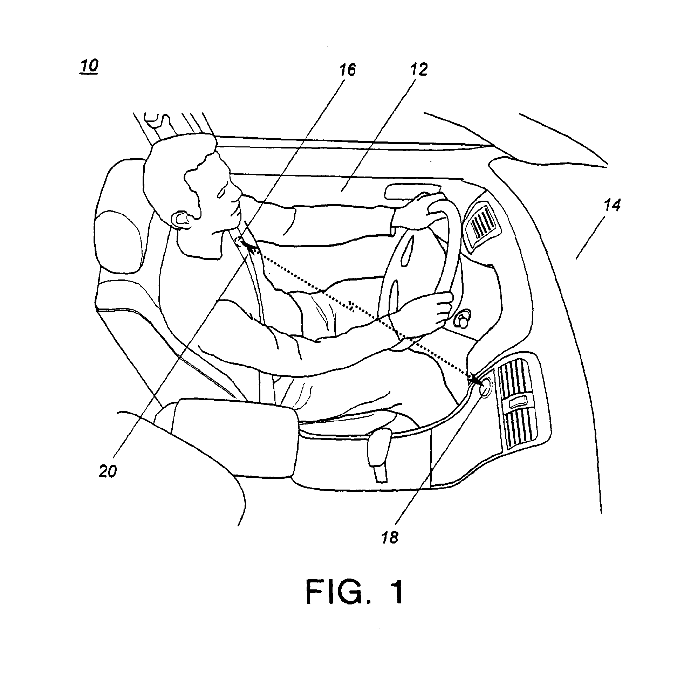

Referring to FIG. 1, is an embodiment of a system 10 for providing recognition of an acoustic sound wave generated within an interior cabin 12 of an automobile 14 or similarly high-noise environment in accordance with the present invention. The system includes 10 an FM wireless microphone unit 16 that transmits an acoustic sound wave of a driver's voice to an FM receiver 18. The microphone unit 16 is a compact, ultra low power, linear high fidelity, wireless FM microphone unit that is capable of high duty cycle continuous operation with an ultra low power output of a microWatt RF, and an ultra low dc power consumption of a nanoAmpere from an independent power source such as a battery. The FM microphone unit 16 can be mounted on a seatbelt 20 or similarly anchored strap at chest level to a seated passenger. This approach provides a shorter distance between the driver's voice and the microphone unit 16 and also positions the microphone unit 16 in a " quiet spot" in the interior compartment 12 of the automobile 14, thereby achieving an approximately 61% signal recognition accuracy corresponding to a 6 to 15 decibel (dB) signal-to-noise ratio improvement. Because the microphone unit 16 is designed as an ultra low power unit that draws only a current of approximately 1-10 nanoAmperes, it can be continuously powered for approximately 3 years by an independent power source as small as a 1.5 volt watch or 3 volt COIN battery. The microphone unit 16 is also a compact unit, preferably less than 1 inch in diameter and may be hermetically packaged to withstand such environmental factors as moisture, air bag firing, etc.

The receiver 18 is a standard FM receiver that is preferably located in the instrument panel of an automobile dashboard and connected to a voice recognition system directly or through an electronic appliance like a cellular telephone.

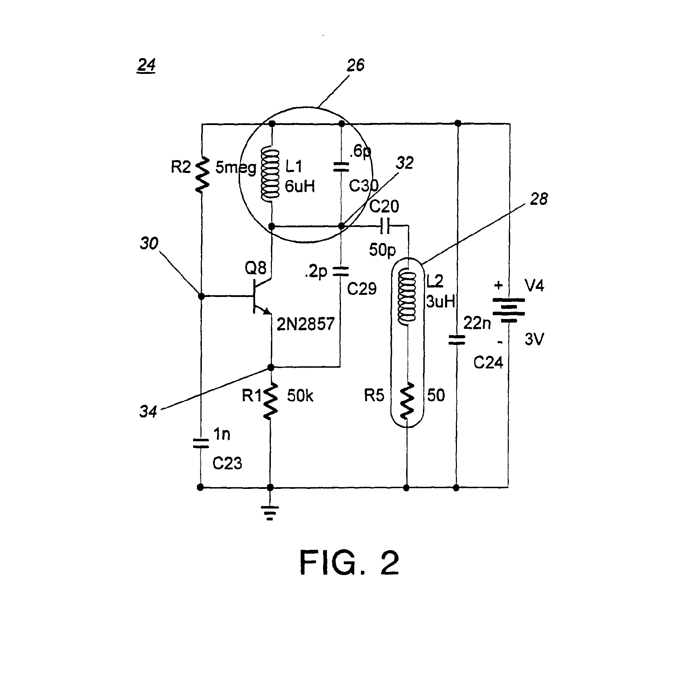

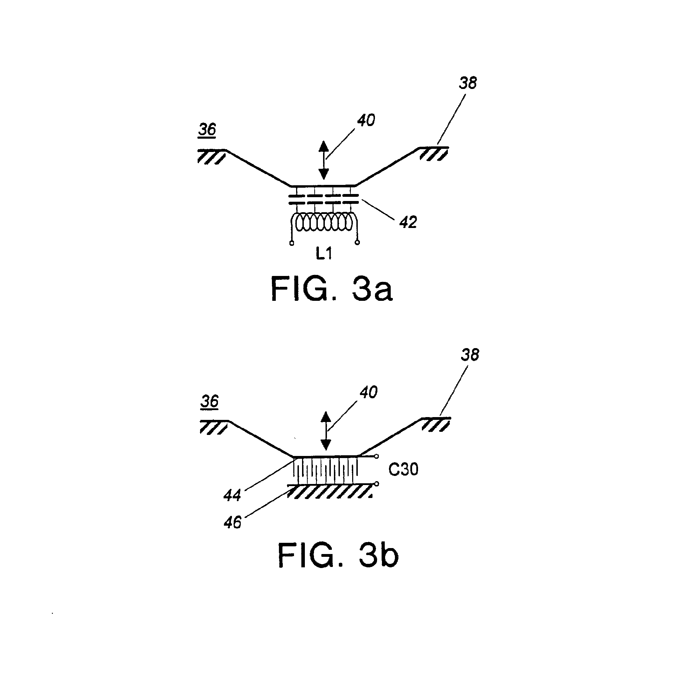

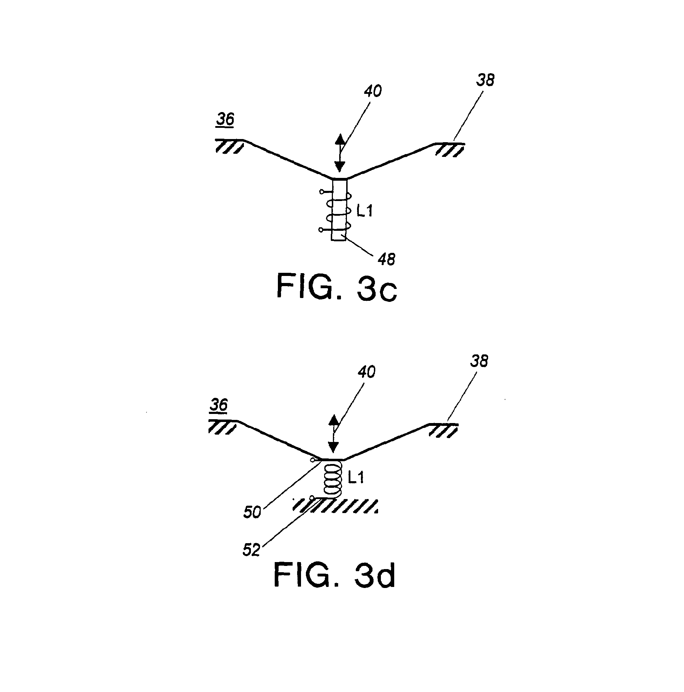

Referring to FIG. 2, is an embodiment of an ultra low power (ULP) compact acoustic transmitter (CAT) circuit 24 for providing the low power, high duty cycle, short range transmission (approximately 2 feet), linear high fidelity, high signal to noise ratio enhancement capabilities of the microphone unit 16 previously described and illustrated in FIG. 1. The transmitter circuit 24 includes a single active oscillator transistor Q8, a parallel resonant circuit "tank" circuit 26, an acoustic transducer (see FIG. 3, numeral 36), and an impedance isolated antenna 28.

The oscillator transistor Q8 is preferably an ultra low power, high impedance, high current gain (hfe=Ic/Ib, where hfe = emitter current gain, Ic=collector current, and Ib=base current), high current gain cutoff frequency (fT) transistor, such as the bipolar (NPN) RF oscillator transistor, 2N2857, manufactured by Semicoa Semiconductors. The 2N2857 transistor is selected for its high current gain of approximately 150 at 3 milliamp (mA) and high current gain cutoff frequency of approximately 1200 MHz at 5 mA. The desired cutoff frequency (fT) of the transistor Q8 is preferably more than 10 times greater than its oscillation frequency at 3 mA. And, since the current gain cutoff frequency fT falls off rapidly with decreasing collector current, the transistor Q8 needs to have a current gain greater than five at very low collector current (nanoamp) in order to oscillate at 75 MHz. In addition to having features that provide a high current gain and high current gain cutoff frequency, the transistor Q8 preferably has a small intrinsic collector base (CB) capacitance (less than 1 picoFarad) to achieve high impedance. Small CB capacitance is achieved by using minimum geometry features such as emitter width and collector area. Finally, the transistor Q8 is preferably selected as an unpackaged transistor chip that is not limited by package parasitics.

Coupled to a base node 30 of the oscillator transistor Q8 and to a battery V4 positive is a 5 megohm base bias resistor R2. The resistor R2 is included in the transmitter circuit 24 to set the dc base current of the oscillator transistor Q8 so that the base current of the oscillator transistor Q8 flows through the resistor R2.

Also coupled to the base node 30 of the oscillator transistor Q8 is a radio frequency (RF) shorting capacitor C23. The capacitor C23 is included in the transmitter circuit 24 to ground the base voltage of the transistor Q8 at radio frequencies near 75 MHz.

The parallel resonant " tank" circuit 26 is coupled to the battery V4 and to a collector node 32 of the oscillator transistor Q8. The tank circuit 26 includes a parallel connection of an inductor L1 and a capacitor C30. The resonant frequency of the Colpitts tank circuit 26 is given by 1/sqrt(L1C30) and the collector base (CB) capacitance of the transistor Q8 appears across C30. In addition to having a resonant frequency in the wireless FM microphone frequency band of 72-76 MHz, the oscillator tank circuit 26 also has a high impedance (Z) that is achieved by characteristically high inductance (approximately 6 microHenry) and small capacitance (approximately 0.6 picoFarad). The impedance is given by the sqrt(L1/C30). The tank circuit 26 is designed to act as an open circuit so as not to load the collector node 32 of the transistor Q8. Its capacitance is approximately the same as the collector base (CB) capacitance of the transistor Q8 to achieve high modulation efficiency and it also has a high quality factor (Q) of greater than approximately thirty to minimize RF losses.

Coupled across the collector node 32 of the oscillator transistor Q8 to an emitter node 34 of the oscillator transistor Q8 is a feedback capacitor C29. The capacitor C29 is included in the transmitter circuit 24 to provide a negative feedback from input to output that causes the transistor Q8 to oscillate when it has a current gain.

Coupled from the emitter node 34 of the oscillator transistor Q8 to ground (V4 negative battery) is a dc biasing resistor R1 that is included in the transmitter circuit 24 to set the dc current through the collector 32 and the emitter 34.

The acoustic transducer 36, as illustrated in FIG. 3 below, is preferably a zero bias, high impedance microphone that requires no additional dc power and is mechanically integrated into the transmitter circuit 24 as an integral part of the parallel resonant tank circuit 26 by one of several approaches described in detail below.

The antenna 28, preferably a short high impedance antenna, includes an impedance isolating inductor L2 and a radiation resistance R5. The antenna 28 is coupled to the collector node 32 of the RF oscillator transistor Q8 via an output coupling capacitor C20 that is coupled to the transistor Q8 at the collector node 32. The antenna 28 is isolated through the inductor L2 to keep the stray capacitance of the driver's body from modulating the collector node 32 capacitance of the transistor Q8. The inductor L2 blocks the stray capacitance by raising the impedance of the antenna 28. This passive inductor approach eliminates the need for an active source follower transistor for antenna isolation. The resistor R5 is included to provide the modeled radiation resistance of the antenna.

The transmitter 24 still further includes a dc bias voltage stabilization capacitor C24 for providing an RF short across the battery V4.

Referring to FIG. 3, the transmitter circuit 24 operates as follows. The acoustic transducer 36 directly modulates the L1 or C30 of the parallel resonant circuit 26 by one of several approaches. For example, as shown in FIG 3a, the acoustic transducer 36 includes a flexible metal diaphragm 38 spaced in close proximity to the wire coil inductor L1 of the tank circuit 26. Displacement of the diaphragm 38, shown by numeral 40, occurs when changes in sound pressure modulate the stray capacitance, shown by the distributed capacitors 42, between the diaphragm 38 and the wire coil windings of the inductor L1. Thus, the instantaneous pressure of the air surrounding the microphone unit 16, as created by the sound of the driver's voice, causes displacement of the diaphragm 38. This displacement in turn acoustically modulates the stray capacitance of the inductor and/or package cavity resonance to produce FM signals corresponding to the sound of the driver's voice.

Alternatively, as shown in FIG. 3b, a microelectro-mechanical systems (MEMS) interdigitated air gap capacitor C30 is included having parallel first 44 and second 46 plates. An acoustic transducer diaphragm 38 is attached to the first plate 44 of the capacitor C30. And the second plate 46 of the capacitor C30 is rigidly fixed so that displacement of the diaphragm 38 due to changes in sound pressure will modulate the overlap of the capacitor plates (44,46), thereby changing their capacitance relative to the amount of area that is overlapping.

In yet another approach, as shown in FIG. 3c, a transducer diaphragm 38 is attached to a ferrite tuning slug 48 that moves within the wire coil of the inductor L1, thereby changing its inductance according to the changes in position of the tuning slug 48 caused by displacement of the diaphragm due to sound pressure changes.

In yet still another approach, as shown in FIG. 3d, a transducer diaphragm 38 is attached to one end 50 of the wire coil of the inductor L1. The opposite end 52 of the wire coil is fixed, creating a coil spring. Displacement of the diaphragm 38 due to sound pressure causes the spacing of the coil windings to change thereby changing the inductance of the wire coil L1.

Thus, the embodiment of the present invention as illustrated in FIGs. 2 and 3 is a minimum component, minimum dc power approach to designing the microphone unit 16. In particular, it eliminates the need for a biased microphone, a biased microphone amplifier, and a biased source follower for antenna isolation. The approach integrates an acoustic transducer element into the microphone unit package, where a package lid may function as the diaphragm of the acoustic transducer. And by directly varying the capacitance or inductance of the tank circuit 26 using the acoustic transducer 36, the tank circuit's resonant frequency is modulated to produce frequency modulation (FM) corresponding to the sound of the driver's voice. The FM signal produced by the tank circuit is applied to the antenna where it is transmitted out the transmitter circuit to the FM receiver located in the dashboard of the automobile or to an electronic device capable of processing FM signals. This passive approach eliminates the need for the use of a separate microphone and also eliminates the need for an active source follower transistor for antenna isolation.

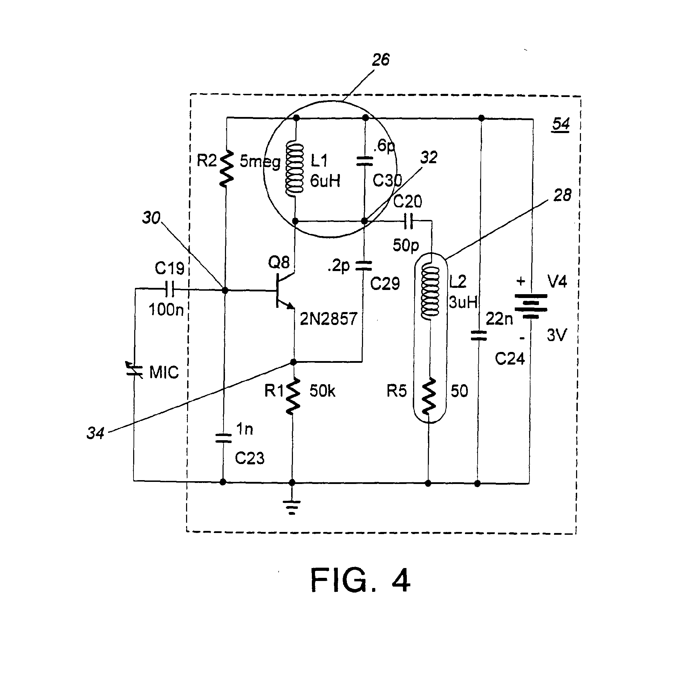

Referring to FIG. 4, in accordance with an alternate embodiment of the present invention is an ultra low power (ULP) compact acoustic transmitter (CAT) circuit 54 having similar components and operation as the transmitter shown in FIG. 2 except that instead of directly modulating the L1 or C30 of the parallel resonant collector tank circuit 26, an independent acoustic transducer device MIC is included that modulates the base emitter (BE) voltage of the NPN oscillator transistor Q8 which in turn modulates the transistor's Q8 collector base (CB) capacitance to produce FM at the tank circuit 26.

The single active oscillator transistor Q8 is coupled to the independent acoustic transducer device MIC, preferably a dynamic zero power microphone, via a direct current (dc) blocking, alternating current (ac) coupling capacitor C19. The capacitor C19 is included in the transmitter circuit 54 to provide the blocking of direct current (dc) while passing audio frequencies of greater than approximately 300 Hz while permitting audio frequencies of approximately 300-3000 Hz to modulate the base voltage.

The transmitter circuit 54 operates as follows. The microphone MIC converts acoustic sound energy generated by the sound of a voice into a voltage. The voltage is applied to the capacitor C19 which blocks any dc from reaching the microphone MIC and passes audio frequencies of the acoustic sound energy represented by the voltage from the microphone MIC to the base node 30 of the oscillator transistor Q8. There, the voltage is used to modulate the base emitter (BE) voltage of the oscillator transistor Q8, producing modulation of the transistor's collector base (CB) capacitance. This in turn modulates the resonant frequency of the L1 C30 tank circuit 26 by varying the capacitance in parallel with C30. And the modulation of the resonant frequency of the tank circuit 26 produces frequency modulation (FM) corresponding to the sound of the driver's voice. The resonant frequency of the Colpitts oscillator is given by 1/sqrt(L1C30) and the capacitance of the transistor Q8 appears across C30.

The FM signal produced by the tank circuit 26 is applied to the antenna 28 where it is transmitted out the transmitter circuit 54 to an FM receiver located in the dashboard of the automobile or to an electronic device capable of processing FM signals.

Obviously, many modifications and variations of the present invention are possible in light of the above teachings. Thus, it is to be understood that, within the scope of the appended claims, the invention may be practiced otherwise than as specifically described above.

## Claims

1. A system for providing recognition of an acoustic wave generated within an interior cabin of an automobile, comprising:
an anchored strap disposed across a chest of a passenger seated in the automobile;
a wireless microphone unit integrated with the anchored strap at a position substantially proximal to the passenger's chest, the microphone unit detecting the acoustic wave and transmitting a frequency modulated signal corresponding thereto; and
a receiver unit spaced from the microphone unit for receiving the frequency modulated signal.

2. A system as recited in claim **1**, wherein the wireless microphone unit is a low power microphone unit.

3. A system as recited in claim **1**, wherein the wireless microphone unit is a linear high fidelity microphone unit.

4. A system as recited in claim **1**, wherein the wireless microphone unit is a high duty cycle microphone unit capable of continuous operation.

5. A system as recited in claim **1**, wherein the wireless microphone unit is mounted to the anchored strap as a detachable microphone unit.

6. A system as recited in claim **1**, wherein the wireless microphone unit comprises
an oscillator transistor having a base node and a collector node;
a parallel resonant circuit coupled to the collector node of the oscillator transistor, the parallel resonant circuit comprising an inductor and a capacitor;
an acoustic transducer coupled to the parallel resonant circuit; and
an antenna coupled to the collector node of the oscillator transistor for transmitting the frequency modulated signal to the receiver unit.

7. A system as recited in claim **6**, wherein the acoustic transducer comprises a diaphragm spaced from the inductor and a plurality of distributed capacitors disposed between the diaphragm and the inductor, displacement of the diaphragm in response to a sound pressure of the acoustic wave modulating a stray capacitance of the inductor to generate the frequency modulation signal.

8. A system as recited in claim **6**, wherein the capacitor is an interdigitated air gap capacitor having a first plate and a second plate spaced parallel from the first plate.

9. A system as recited in claim **8**, wherein the air gap capacitor is a microelectro-mechanical systems (MEMS) interdigitated air gap capacitor.

10. A system as recited in claim **8**, wherein the acoustic transducer comprises a diaphragm coupled to the first plate, displacement of the diaphragm in response to a sound pressure of the acoustic wave modulating the capacitance of the first plate and the second plate to generate the frequency modulation signal.

11. A system as recited in claim **6**, wherein the acoustic transducer comprises a ferrite tuning slug, the ferrite tuning slug moving within a wire coil of the inductor and a diaphragm attached to the ferrite tuning slug, displacement of the diaphragm in response to a sound pressure of the acoustic wave modulating the inductance of the inductor to generate the frequency modulation signal.

12. A system as recited in claim **6**, wherein the inductor comprises a wire coil having a first end and a stationary second end opposite the first end.

13. A system as recited in claim **12**, wherein the acoustic transducer comprises a diaphragm attached to the first end of a wire coil of the inductor, displacement of the diaphragm in response to a sound pressure of the acoustic wave modulating the inductance of the inductor to generate the frequency modulation signal.

14. A system as recited in claim **6**, wherein the oscillator transistor is a low power oscillator transistor.

15. A system as recited in claim **6**, wherein the oscillator transistor is a high current gain transistor.

16. A system as recited in claim **6**, wherein the oscillator transistor is a high current gain cutoff frequency transistor.

17. A system as recited in claim **6**, wherein the antenna is a short high impedance antenna.

18. A system as recited in claim **6**, wherein the antenna is an impedance isolated antenna.
